# EUROPEAN PATENT SPECIFICATION

(11) **EP 2 801 437 B1**
(45) Date of publication and mention of the grant of the patent: **26.06.2019**
(21) Application number: 14167531.4
(22) Date of filing: 08.05.2014
(51) Int. Cl.: B23P 15/02, F01D 5/14, F04D 29/38, F04D 29/02, F04D 29/32

(54) **Method for manufactureing blades for axial flow machines**
Verfahren zur Herstellung von Schaufeln für axiale Strömungsmaschinen
Procédé de fabrication de pales pour machines à flux axial

(30) Priority: 08.05.2013 SE 1300323
(43) Date of publication of application: 12.11.2014
(73) Proprietor: AB Akron-Maskiner, 531 94 Järpås (SE)
(72) Inventor: Hellsvik, Erik, 532 32 SKARA (SE); Svensson, Richard, 531 57 LIDKÖPING (SE)
(74) Representative: Ehrner & Delmar Patentbyrå AB

(56) References cited:
- FR-A- 1 144 946
- GB-A- 713 690
- GB-A- 1 089 247
- GB-A- 2 062 120
- US-A- 2 514 525
- US-A- 3 052 961

## Description

### Field of the invention

The present invention relates to a method for manufacturing blades for axial flow machines such as axial fans, axial compressors and axial turbines.

### Background of the invention

The purpose of the flow machine is to create or use pressure differences appearing as the fluid flows through the machine.

A core component of an axial flow machine is the rotor. Commonly, the rotor consists of a hub and blades attached to the hub.

The blade of the axial flow machine has a profile, which means the shape of the cross-section of the blade at a right angle to the radial axis. The part of the blade profile which divides the oncoming flow is the leading edge, and the opposite part where the flow leaves the blade is the trailing edge. One side of the profile, from the leading edge to the trailing edge, is the pressure side and the opposite side of the profile, also from the leading to the trailing edge, is the suction side. An imaginary straight line from the leading to the trailing edge is the chord. The fluid flows relative to the blade from the leading to the trailing edge along the pressure and suction sides. The actual blade profiled is designed specifically for the application in order to provide a desired performance.

The blade speed relative to the fluid changes along the radial axis as the rotor spins. The part of the blade close to the hub has a low velocity compared to the part of the blade near the rotor periphery. To make most use of this velocity variation, the angle between the chord and the profile direction of motion, which can be defined as an angle of attack, is made to vary with the radial position of the blade. Using this definition, the angle of attack is large at the hub where the blade velocity is low and small near the periphery, where the blade velocity is high. The variation in the angle of attack is achieved by twisting the blade. A blade without twist cannot achieve the same high performance as a blade with twist.

The performance of a rotor, i.e., the ability to create or use a desired pressure difference, depends on the shape of the blade profile as well as the twist of the blade. High performance is achieved using complex blade shapes.

Complex blade shapes are achievable by e.g., metal casting which is the dominant manufacturing method. In order to keep a low manufacturing cost, simple tools are most often used. This prevents blades having cavities, which in turn leads to industrial fan blades usually being solid which requires a lot of material. As a consequence the blades are heavy.

Blades having cavities or are hollow requires less material by comparison and are also lighter. Less material gives a lower material cost and a reduction in weight leads to less strain on load carrying parts, e.g., the rotor hub. It is therefore desirable to be able to create hollow blades with a desired outer shape without an expensive method of manufacturing. One way to manufacture a long hollow blade with a desired profile is by extrusion. Extrusion and other shaping methods cannot however include the possibility to have a twisted blade. An extruded blade without turning will then have a limited performance unless it is twisted to the desired turning after manufacturing. The process of twisting hollow thin-walled profiles is however associated with a risk of buckling. If a thin-walled metal tube with a closed cross-sectional profile is subjected to a turning moment, this turning moment will cause tension in the material in undesired directions. If the level of tension exceeds the yield strength, the tube will collapse before the desired turning angle along the tube length axis is achieved.

GB 713 690 A concerns a process for twisting turbo-machine blades fashioned from sheet metal. In the process according to this document a section of the profile of the blade, consisting of one or more parts of sheet metal, is distorted according to the required twist whilst an edge of the profile is still open, and is held in the twisted condition while that edge which is still open is closed to form a completely closed hollow element.

Another process for twisting a hollow blade for an axial flow turbo-machine is known from FR 1 144 946 A.

US 2 514 525 A relates i.e. to a method of producing a metal blade construction which is interiorly reinforced with a rib arrangement and which has its external surfaces disposed substantially symmetrically with respect to a plane extending longitudinally thereof.

### Summary of the invention

The invention describes a method to produce blades for axial flow comprising the features of claim 1. Preferred embodiments of the method are presented in the dependent claims.

The construction part here denoted as blade refers to corresponding detail regardless of if it is called blade, shovel, wing, or something else. In the same manner, the denotation rotor also refers to an impeller, fan wheel or something else. The blades are described below without any description of the assembled rotor or the assembled flow machine.

One object of the invention is to produce light weight blades using less material than conventionally for axial flow machines, while the blade profile and blade turning still can be achieved to ensure desired performance. This and other objects are met by manufacturing the blades in units. The units consist of main parts which by their designs allow reshaping of the unit to the desired turning without deforming the profile. Unwanted deformation can be avoided by letting the parts have openings along the longitudinal axis which allows different parts of the blade to move relatively to each other when turning the blade. By doing so, tensions larger than the yield strength are avoided. If one then fixes the different units to each other by e.g., welding or gluing, the blade shape including turning will persist after the turning moment has been removed.

The procedure can be summarized in short by the following steps (A-E):
A. Shaping of the main part to desired profile and length.
B. When applicable, joining more than one main part to a blade.
C. Turning of the blade and at the same time relative displacement of opposite surfaces in the parts.
D. Fixing the displaced surfaces in their new positions.
E. Mounting of additional parts when applicable.

A blade consists thereby of one or more longitudinal main parts that extends in the radial direction from the rotor hub to the periphery. The main parts can have a cross-section (perpendicular to the radial axis) profile that in form and shape is mainly fixed so that the parts can be manufactured by e.g., extrusion.

The blade is constructed using two or more main parts that together form a unit with a cross section comprising the entire blade profile or a part of the blade profile. If such main parts are shaped according to the invention, such a unit can also be twisted to a desired twist angle without deformation of the blade profile. The main part in this embodiment is equipped with attachment details extending along the blade length axis so that the blade cross section is kept while the main parts are allowed to move relative to each other along the blade length axis when twisting the blade to its desired shape. When the blade has been turned to the desired twist angle, this can be made permanent by fixing the main parts to each other in their new relative positions.

In an embodiment where more than one longitudinal main part is included in the unit, two or more of the main parts can have identical cross-sectional shapes so that only one type of main part is required to provide material to e.g., both the main part containing the pressure side and the part containing the suction side.

In addition to the main part, the blade contains one or more additional parts that together with the main parts compose the blade, profile and also act as protective parts over the fixing points where the profile parts are joined. These parts can also seal the ends of the blade in order to prevent undesired interior flow.

It should be mentioned that there are additional ways to provide the possibility to twist a hollow profile to a desired twist angle by allowing relative displacement of the ingoing parts along the length axis and thereafter make the twist permanent by fixing the displaced surfaces to each other.

### Short description of figures

Fig. 1 shows a unit consisting of one single main part having cavities and openings.
Fig. 2 shows, in perspective, the unit according to Fig. 1.
Fig. 3 shows the unit according to Fig. 1 with the twisting made permanent by welding together of the openings of the main part.
Fig. 4 shows a main part used in the method according to one embodiment of the present invention in which the profile consists of more than one main part.
Fig. 5 shows, in cross section, two main parts according to Fig. 4, brought together to a unit.
Fig. 6 shows, in perspective, two main parts according to Fig. 4, brought together to a unit.
Fig. 7 shows two main parts according to Fig. 4 brought together with the twisting made permanent by riveting together the main parts to each other.
Fig. 8 shows an additional part for the side portions of the unit.
Fig. 9 shows an additional part for the ends of the unit.
Fig. 10 shows a into desired twisting fixed unit having two main parts according to Fig. 4 and two additional parts according to Fig. 8 and one additional part according to Fig. 9 mounted thereon.
Fig. 11 shows how different pieces, at the end of a unit, move relative to each other and form a step.

### Detailed description of embodiments of the invention

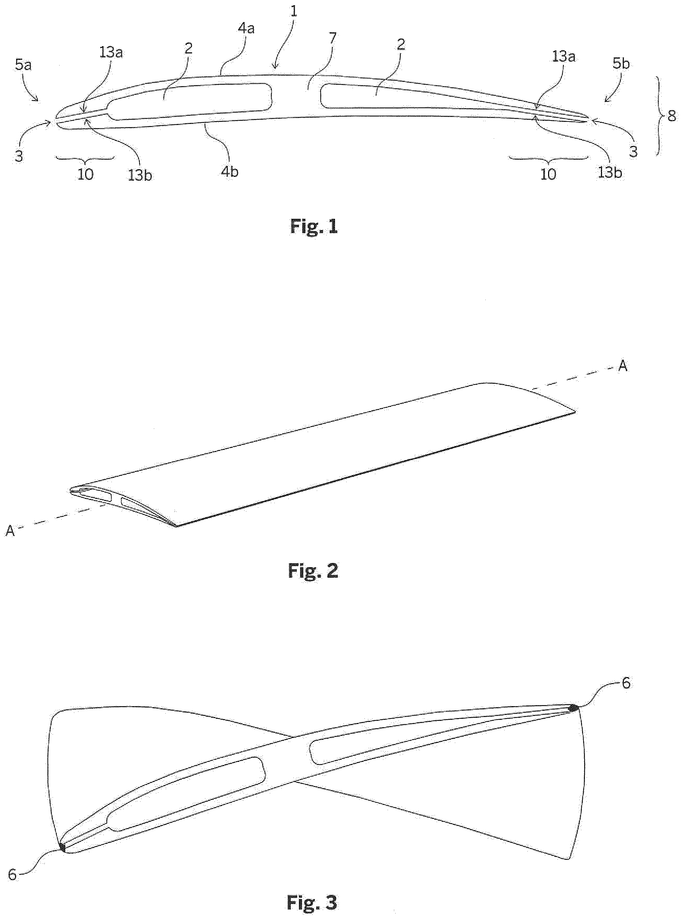

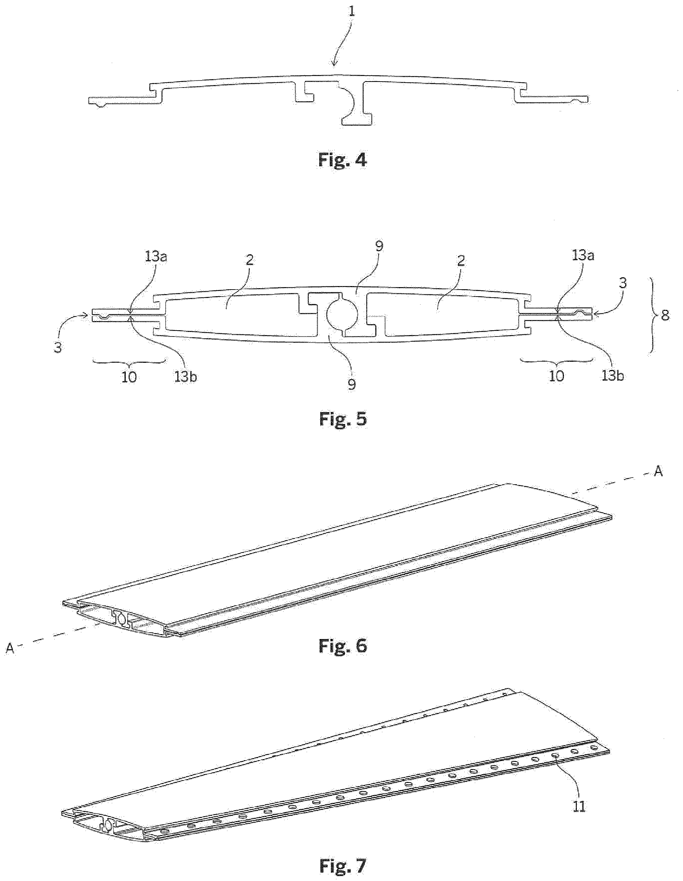

One, according to the invention, early step is to provide a unit 8 having two or more, along a longitudinal axis A-A, extended main part(s) 1. Different examples of said unit 8 are shown in Fig. 1 and Fig. 5, respectively. Different examples of said main part 1 are shown in Fig. 1 and Fig. 4, respectively. Said unit 8 has at least one longitudinal side portion 10 which extends between opposite ends of the unit 8. In the side portions 10 there is a first longitudinal surface 13a which faces an opposite second longitudinal surface 13b. Said main parts 1 can be manufactured so that they, along its extension or their extensions, either has regarding shape and size fixed or regarding shape and/or size variable cross section profile.

In an example the unit 8 is formed of one single main part 1 having at least one longitudinal side portion 10. Such a side portion 10 shows a longitudinal slot or opening 3 lying between said first longitudinal surface 13a and said second longitudinal surface 13b. The blades illustrated in Figs. 1, 2, 3, and 11 are made according to this example.

According to the invention the unit 8, with said first longitudinal surface 13a facing said second longitudinal surface 13b, is formed of two or more main parts 1 which are brought together. Two or more of the main parts 1 may in this embodiment either be given mutually identical or mutually different cross section profiles. In the case two or more main parts 1 are given mutually identical cross section profiles the invention gives the advantage that the manufacturing costs can be reduced since a less number of tools for the shaping process will then be necessary. Said two or more main parts 1 are according to the invention provided with attachment details 9 which lock together the main parts 1 without at the same time eliminate the possibility of the main parts to move relative to each other in the direction of the longitudinal axis A-A. Even such attachment details 9 can reduce the manufacturing costs since these form one, in the unit built in and for the following steps of the method, facilitating fixture. The blade illustrated in Figs. 4, 5 6, and 7, which comprises a unit 8 composed of two main parts 1 with attachment details 9 and side portions 10, is made according to this embodiment.

The blade according Figs. 1, 2, and 3 has an asymmetrical cross section profile with a thicker, in the figures left part, which forms the leading edge 5a of the blade profile and a thinner, in the figures right part, which forms the trailing edge 5b of the blade profile, which, for blades which are not intended to be reversed with maintained performance, is advantageous from an aerodynamic perspective. The blades illustrated in Figs. 4, 5, 6, 7, and 11 have symmetric cross section profile which, for blades which are intended to be reversed with maintained performance, is advantageous from an aerodynamic perspective.

In a particularly preferred embodiment of the invention the unit 8 is shaped so that said first and second longitudinal surfaces 13a-b extend up to one or several cavities 2 formed within in the blade. Such cavities 2 are advantageous since they on one hand reduce the weight of the blade, which reduces the demand regarding structural strength of weight carrying parts, and on the other hand gives lower consumption of material, which in its turn gives lower manufacturing costs. In Figs. 1 and 5 two material and weight saving cavities 2 extend within the unit 8. The cavities 2, which extend in major parts of the left respective right half of the blade, are connected with the area outside the unit 8 by openings 3 situated between said first and said second longitudinal surfaces 13a-b.

The openings 3 run along the whole extension of the unit 8 in the direction of the longitudinal axis A-A and can be shaped so that said first and said second longitudinal surfaces 13a-b are not in contact with each other or so that they are in contact with each other, but yet have the possibility to slide against each other in the direction of the longitudinal axis A-A. The first and second longitudinal surfaces 13a-b may have the same shape, so that they on an extended surface fit against each other, if they are in contact with each other, or different shape, so that they only will come into contact with each other along a line in the direction of the longitudinal axis A-A.

In further particularly preferred embodiments of the invention the main parts 1 are manufacture so that they, along their extension, are straight without twisting and/or have regarding the form and size fix cross section profile, so that a cross section through a main part 1 through a plan perpendicular to the longitudinal axis will look the same independently where along the longitudinal axis A-A the section is taken. The main part 1, according to such embodiments, may be produced in a particularly simple way through extrusion. The invention even allows that the main parts 1 are manufactured with an initial twisting along its extension for example with the purpose that the following rotation should be able to be limited to become an adjustment of said initial twisting. Furthermore, the invention allows that the main parts 1 have regarding the shape and/or size varying cross section profile, a suitable shaping method for the main parts can then be casting.

One, according to the invention, following step is to turn the unit around the longitudinal axis A-A so that one end of the unit 8 is turned relative to the other end of the unit 8, and that the first longitudinal surface 13a of said side portion or side portions 10 at the same time move relative to the opposite second longitudinal surface 13b in the direction of said longitudinal axis A-A. This step may be performed so that the twisting is either distributed evenly or unevenly along the extension of the unit 8. A bridge 7 extends along the longitudinal axis A-A in Fig. 1, which bridge connects the material at the pressure side 4b of the profile with the material of the suction side 4a of the profile, and in this way a unit 8 is formed with two cavities 2 separated from each other. Also in Fig. 5 a unit 8 is formed with two cavities 2 separated from each other when the main parts 1 are attached by the attachment details 9. When a moment is applied along the longitudinal axis A-A of the unit 8, according to any of the Figs. 1 or 5, the first longitudinal surface 13a will move relative to the second longitudinal surface 13b in the direction of the longitudinal axis A-A at both side portions 10 of the profile.

One according to the invention late step is to fixate said opposite first and second longitudinal surfaces 13a-b into each other in their, as a consequence of said turning relative to each other, new positions obtained and hereby make permanent the achieved twisting. In Figs. 1 and 4, respectively, the first and second longitudinal surfaces 13-b are not attached and the unit 8 would therefore spontaneously turn back to the straight shapes illustrated in Figs. 2 and 6, respectively, if such a twisting moment is removed. The fixation can be made in different ways, for instance by cwelding, riveting, upsetting, gluing or screwing. In Fig. 3 the desired twisting is shown made permanent by welding 6 together and in Fig. 7 by riveting 11 together of the first and second longitudinal surfaces 13-b of the unit to each other.

According to the invention the unit 8 is supplemented with one or several additional parts 12 which are arranged towards the main part 1 of the unit 8. Such supplementary additional parts 12 may extend in the direction of the longitudinal axis A-A and be arranged against the side portions 10 of the main parts 1, for instance with the purpose of forming a portion of the exterior shape of the blade and/or to protect any part of the side portions 10 against exposure. Alternatively, supplementary additional parts 12 can be arranged towards the ends of the main parts 1 and then work as finishing parts. Such finishing parts can for instance form sealings, which on one hand protect inner cavities 2 of the unit 8 against exposure of impurities and on the other hand eliminate undesired flows of fluid within the unit 8. Said additional parts 12 may be manufacture so that they, along their extension, either have to form and shape fix or to form and/or size variable cross section profile. In the case they have fix cross section profile extrusion is an advantageous method of shaping. In the case the unit 8 is supplemented with more than one additional part 12 two or more of the additional parts 12 may in certain cases be given a mutual identical cross section profile and then obtain the advantage that the manufacturing costs can be reduced since less tools for the manufacturing method will be necessary. In view of the design of the main part 1 and of the additional part 12 and in view of the design of methods for turning and mounting on, the additional part 12 may be mounted on the unit 8 at the moment which is best suited; before, during or after turning of the unit 8. In the case the mounting of possible additional parts 12 is made before the turning of the unit 8, the attachment of the additional unit 8 can be performed simultaneously as the first and the second longitudinal surfaces 13a-b of the unit are fixated to each other in their relative to each other new positions.

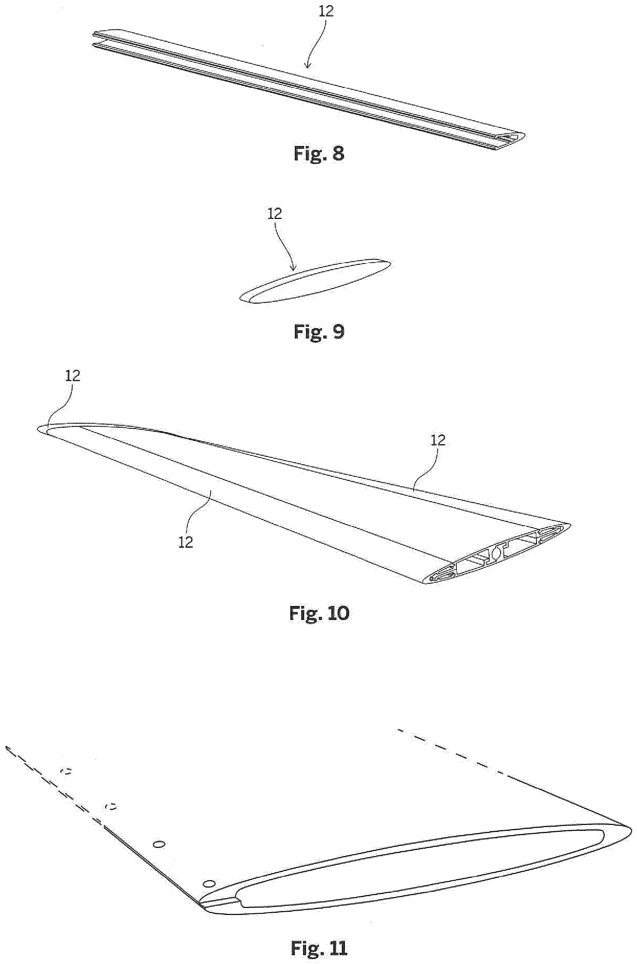

The additional part 12 illustrated in Fig. 8 has a cross section which to its shape fits against, and may be pushed on to the side portions 10 of the main parts illustrated in Fig. 5 and may in this way on one hand form a portion of the external shape of the blade and on the other hand protect the joint 11 against exposing.

The additional part 12 according to Fig. 9 has a shape where the circumference corresponds to the external shape of the profile of the blade, and may, when it is mounted to the end of the blade, function as a sealing and then on one hand protect the inner cavities 2 of the unit 8 against exposing towards impurities and on the other hand eliminate unwanted flows of fluid within the unit 8. It should be mentioned that the invention is not limited to the forms of the additional part 12 as illustrated and combinations of the main part 1 and the additional part 12 as illustrated.

The symmetrical unit 8 illustrated in Fig. 10 is made up of two portions which are identical and along its extension uniform main parts 1. At both side portions 10 of the unit 8 and at one end of the unit 8 additional parts 12 are arranged. The unit 8 is turned to the desired twisting. The parts 1 mounted together and turned according to the figure form a complete blade which is ready to be mounted on a hub to a reversible axial fan.

## Claims

1. Method for manufacturing blades for flow machines of axial type, such as axial fans, comprising the steps of:
providing a unit (8) by bringing together two or more main parts (1) extending along a longitudinal axis (A-A), which main parts (1) brought together form said unit (8) having two longitudinal side portions (10) extending between two opposite ends of the unit (8), each side portion (10) comprising a first longitudinal surface (13a) facing an opposite second longitudinal surface (13b),
providing said main part (1) with attachment details (9), where the attachment details (9) lock together the main parts (1) without simultaneously eliminating the possibility of the main parts (1) to move relative to each other in the direction of the longitudinal axis (A-A),
twisting the unit (8) around the longitudinal axis (A-A) so that the first longitudinal surfaces (13a) of said side portions (10) move relative to the opposite second longitudinal surfaces (13b) in the direction of said longitudinal axis (A-A),
after twisting to desired angle difference between both ends of the unit (8), fixation of the first longitudinal surfaces (13a) of said side portions (10) in its new, relative to the opposite second longitudinal surfaces (13b) of the side portions (10), position, whereby the achieved twist is made permanent, and
arranging at least one supplementary addition part (12) against the unit (8), wherein said supplementary additional part (12) extended in the direction of the longitudinal axis (A-A) and is arranged towards the side portions (10) of said unit (8).

2. Method according to claim 1, wherein said main parts (1) are manufactured along their extensions with fix cross section profiles, and wherein said main parts (1) are manufactured by extrusion.

3. Method according to claim 1, wherein two or more of said main parts (1) are given mutually identical cross section profiles.

4. Method according to claim 1, wherein said at least one supplementary additional part (12) is manufactured with, along its extensions, fix cross section profiles, and wherein said at least one supplementary additional part (12) is manufactured by extrusion.

5. Method according to claim 1, wherein two supplementary additional parts (12), which are arranged at different positions in the unit (8), have mutually identical cross section profiles.

6. Method according to anyone of the preceding claims, wherein said step of providing a unit (8) comprises, before twisting, providing one totally straight or several totally straight main part(s) (1) without twist.

7. Method according to anyone of the preceding claims, wherein said step of providing a unit (8) comprises producing said first longitudinal surfaces (13a) and said second longitudinal surfaces (13b) so that they extend into at least one cavity (2) formed in the unit (8).

8. Method according to anyone of the preceding claims, wherein the steps of fixating said first and said second longitudinal surfaces (13a-b) towards each other comprises that said surfaces are welded, riveted, upsetted, glued or screwed to each other.

## Patentansprüche

1. Verfahren zum Herstellen von Schaufeln für Strömungsmaschinen des axialen Typs, wie etwa Axialventilatoren, umfassend die folgenden Schritte:
Bereitstellen einer Einheit (8) durch Zusammenführen von zwei oder mehreren Hauptteilen (1), die sich entlang einer Längsachse (A-A) erstrecken, wobei die zusammengeführten Hauptteile (1) die Einheit (8) mit zwei Längsseitenabschnitten (10) bilden, die sich zwischen zwei gegenüberliegenden Enden der Einheit (8) erstrecken, wobei jeder Seitenabschnitt (10) eine erste Längsfläche (13a) umfasst, die einer gegenüberliegenden zweiten Längsfläche (13b) zugewandt ist,
Versehen des Hauptteils (1) mit Befestigungselementen (9), wobei die Befestigungselemente (9) die Hauptteile (1) miteinander koppeln, ohne gleichzeitig die Möglichkeit zu eliminieren, dass sich die Hauptteile (1) in der Richtung der Längsachse (A-A) in Relation zueinander bewegen,
Verdrehen der Einheit (8) um die Längsachse (A-A) derart, dass sich die ersten Längsflächen (13a) der Seitenabschnitte (10) in der Richtung der Längsachse (A-A) in Relation zu den gegenüberliegenden zweiten Längsflächen (13b) bewegen,
nach Verdrehen zu einer gewünschten Winkeldifferenz zwischen beiden Enden der Einheit (8) Fixierung der ersten Längsflächen (13a) der Seitenabschnitte (10) in ihre neue Position in Relation zu den gegenüberliegenden zweiten Längsflächen (13b) der Seitenabschnitte (10), wobei die erreichte Verdrehung dauerhaft gemacht wird, und
Anordnen zumindest eines ergänzenden Zusatzteils (12) an der Einheit (8), wobei sich das ergänzende Zusatzteil (12) in der Richtung der Längsachse (A-A) erstreckt und hin zu den Seitenabschnitten (10) der Einheit (8) angeordnet ist.

2. Verfahren nach Anspruch 1, wobei die Hauptteile (1) entlang ihrer Ausdehnungen mit festen Querschnittsprofilen hergestellt werden, und wobei die Hauptteile (1) durch Strangpressen hergestellt werden.

3. Verfahren nach Anspruch 1, wobei zwei oder mehreren der Hauptteile (1) wechselseitig identische Querschnittsprofile verliehen werden.

4. Verfahren nach Anspruch 1, wobei das mindestens eine ergänzende Zusatzteil (12) mit, entlang seiner Ausdehnungen, festen Querschnittsprofilen hergestellt wird, und wobei das mindestens eine ergänzende Zusatzteil (12) durch Strangpressen hergestellt wird.

5. Verfahren nach Anspruch 1, wobei zwei ergänzende Zusatzteile (12), die an unterschiedlichen Positionen in der Einheit (8) angeordnet sind, wechselseitig identische Querschnittsprofile aufweisen.

6. Verfahren nach einem der vorhergehenden Ansprüche, wobei der Schritt des Bereitstellens einer Einheit (8), vor Verdrehen, Bereitstellen eines völlig geraden oder mehrerer völlig gerader Hauptteil(s/e) (1) ohne Verdrehung umfasst.

7. Verfahren nach einem der vorhergehenden Ansprüche, wobei der Schritt des Bereitstellens einer Einheit (8) Fertigen der ersten Längsflächen (13a) und der zweiten Längsflächen (13b) derart umfasst, dass sie sich in zumindest einen in der Einheit (8) ausgebildeten Hohlraum (2) erstrecken.

8. Verfahren nach einem der vorhergehenden Ansprüche, wobei die Schritte des Fixierens der ersten und der zweiten Längsflächen (13a-b) aneinander umfasst, dass die Flächen aneinander geschweißt, genietet, gestaucht, geklebt oder geschraubt werden.

## Revendications

1. Procédé de fabrication de pales pour turbomachines de type axial, telles que des ventilateurs axiaux, comprenant les étapes consistant à:
fournir une unité (8) en rassemblant deux ou plusieurs parties principales (1) s'étendant le long d'un axe longitudinal (A-A), lesquelles parties principales (1) rassemblées forment ladite unité (8) ayant deux parties latérales (10) longitudinales s'étendant entre deux extrémités opposées de l'unité (8), chaque partie latérale (10) comprenant une première surface longitudinale (13a) tournée vers une seconde surface longitudinale (13b) opposée,
munir ladite partie principale (1) d'éléments de fixation (9), les éléments de fixation (9) bloquant ensemble les parties principales (1) sans éliminer simultanément la possibilité que les parties principales (1) puissent se déplacer les unes par rapport aux autres dans la direction de l'axe longitudinal (A-A),
tordre l'unité (8) autour de l'axe longitudinal (A-A) de sorte que les premières surfaces longitudinales (13a) desdites parties latérales (10) se déplacent par rapport aux secondes surfaces longitudinales opposées (13b) dans la direction dudit axe longitudinal (A-A),
après torsion à la différence d'angle souhaitée entre les deux extrémités de l'unité (8), fixer les premières surfaces longitudinales (13a) desdites parties latérales (10) dans leur nouvelle position, par rapport aux secondes surfaces longitudinales opposées (13b) des parties latérales (10), la torsion obtenue étant rendue permanente, et
disposer au moins une partie d'addition supplémentaire (12) contre l'unité (8), ladite partie d'addition supplémentaire (12) s'étendant dans la direction de l'axe longitudinal (A-A) et étant disposée vers les parties latérales (10) de ladite unité (8).

2. Procédé selon la revendication 1, dans lequel lesdites parties principales (1) sont fabriquées le long de leurs extensions avec des profils de section transversale fixes, et dans lequel lesdites parties principales (1) sont fabriquées par extrusion.

3. Procédé selon la revendication 1, dans lequel deux ou plusieurs desdites parties principales (1) ont des profils de section transversale mutuellement identiques.

4. Procédé selon la revendication 1, dans lequel on fabrique ladite au moins une partie d'addition supplémentaire (12) avec, le long de ses extensions, des profils de section transversale fixes, et dans lequel on fabrique ladite au moins une partie d'addition supplémentaire (12) par extrusion.

5. Procédé selon la revendication 1, dans lequel deux parties d'addition supplémentaires (12), qui sont disposées à des endroits différents dans l'unité (8), présentent des profils de section identiques mutuellement.

6. Procédé selon l'une quelconque des revendications précédentes, dans lequel ladite étape de fourniture d'une unité (8) comprend, avant torsion, la fourniture d'une ou de plusieurs partie(s) principale(s) (1) totalement droite(s) sans torsion.

7. Procédé selon l'une quelconque des revendications précédentes, dans lequel ladite étape de fourniture d'une unité (8) comprend la production desdites premières surfaces longitudinales (13a) et desdites secondes surfaces longitudinales (13b) de sorte qu'elles s'étendent dans au moins une cavité (2) formée dans l'unité (8).

8. Procédé selon l'une quelconque des revendications précédentes, dans lequel les étapes de fixation desdites première et seconde surfaces longitudinales (13a-b) l'une vers l'autre comprennent le fait que lesdites surfaces sont soudées, rivetées, remontées, collées ou vissées l'une à l'autre.
